# EUROPEAN PATENT APPLICATION

(11) **EP 1 886 948 A1**
(43) Date of publication of application: **13.02.2008**
(21) Application number: 06381033.7
(22) Date of filing: 09.08.2006
(51) Int. Cl.: B65G 65/00, A22C 7/00, B65D 19/02, B65D 25/04

(54) **Procedure for loading, transporting and unloading boneless pressed hams, and a pallet for said procedure**

(71) Applicant: Monente Plösser, Francisco, 08490 Tordera (Barcelona) (ES)
(72) Inventor: Monente Plösser, Francisco, 08490 Tordera (Barcelona) (ES)
(74) Representative: Esteban Perez-Serrano, Maria Isabel

(57) **Abstract**

The present invention refers to a procedure for loading, transporting and unloading boneless pressed hams, and a pallet for said procedure, from amongst the different procedures for handling de-boned ham (1), which enables the pressed hams both to be stored in a pallet (2) that optimises the space and the processing time and to be kept at the right temperature before being cut into slices, and where no second pressing stage is needed prior to slicing, with the result that the ham maintains its rectangular parallelepiped shape after pressing and the slicing process is successfully standardised so that all the slices have the same weight.

## Description

### OBJECT OF THE INVENTION

The present invention refers to a procedure for the loading, transporting and unloading boneless pressed hams, and a pallet for said procedure, from amongst the different procedures for handling de-boned ham.

Due to its special configuration, the procedure for loading, transporting and unloading of boneless pressed hams enables said pressed hams to be stored in a pallet which optimises the space and the length of the process and allows the hams to be kept at the right temperature before being cut into slices.

Likewise, as the hams are kept in cavities in the pallet, a second pressing stage is not needed prior to cutting either, so that the ham maintains its rectangular parallelepiped shape after pressing and the cutting process is successfully standardised so that all the slices have the same weight.

### BACKGROUND OF THE INVENTION

In recent times ham industrialisation has not only extended to the accelerated curing of this traditional product, but it is also spreading to other stages in its handling up to final presentation.

This is the case of cutting machines, such as those that adapt the dimensions of the slices when it comes to depositing them on trays for dispatching in self-service display units at major retail outlets. Nonetheless, there are still many other stages to be covered before reaching complete automation of the production chain.

At industrial level there are two systems for pressing boneless ham. In the first of these the ham is pressed in two stages, in the former preforming is achieved by using a vacuum bag as a mould, proceeding to the application of this vacuum after packaging and pressing. It is then frozen before undergoing a second pressing stage in same before being removed from the bag for slicing.

This second pressing breaks the internal structure of the piece, maintained after the first pressing, and cracks the product to the point of breaking the slice, with the result that non-uniform slices are obtained that increase the inconsistency of the slicing when the cutting machine reaches the highly irregular ends of the piece.

This deficiency has an impact not only on the presentation, but also on the result of the pack, whose weight ranges widely, almost always beyond 4%, the limit of tolerance generally accepted by the buying departments of major retail outlets.

The second system only requires a single stage for pressing the salted de-boned ham, which takes place in a stainless steel mould. Unlike the above-described system, this permits a more regular conformation of the piece, giving it the characteristic rectangular parallelepiped shape already known, with the main drawback of the considerable build-up and transfer of moulds at the different stages in which these are needed.

Using machines performing around 600-1000 cuts per minute and working at temperatures between -10 and -16 °C, a piece is converted into slices in times of 0.25 - 0.5 minutes. If we add to this the techniques of distribution of cutting tops and tails in the trays on which the slices are deposited after being cut, a rational distribution of these may be achieved, not only in terms of consistent attractive appearance, but above all for purposes of their weights being as identical as possible.

However, continuous processings of around one to two hundred hams means not only doubling this figure in the total end parts from each piece, but also in the gradual rise in the temperature from -10 °C and, thereby, the loss of the uniform hardness of the different parts of the ham, homogenized at that initial temperature but lost with the passing of time and its consequent elevation.

Another additional problem that is not resolved by stainless steel moulds is that stemming from the large number of moulds that have to be available in terms of storage, which is fourfold in volume compared with that of the vacuum bags and of the product handling procedure followed.

The applicant is unaware of the existence of other procedures that resolve the above-described problem of irregularity in the shaping of the piece ready for cutting, its simple and speedy handling, as well as in the thermal protection of the set of pieces to be cut, during their entire slicing process, which is carried out with the simplicity and efficiency of the invention that is now going to be described.

### DESCRIPTION OF THE INVENTION

The present invention refers mainly to a procedure for loading, transporting and unloading boneless pressed hams, and a pallet for said procedure, from amongst those that handle de-boned ham and, more particularly, from amongst those that use a pressing stage in pressing boxes, intended to facilitate to the utmost the handling of the hams during the transport of the pieces and their cutting into slices.

The ham piece is de-boned and pressed to form as regular a rectangular parallelepiped as possible for its subsequent insertion straight from the press into cavities present in a stainless steel pallet.

This pallet makes it possible to optimise the use of space, as hams are inserted into the cavities, between which spacer elements are set in place that enable the ham piece to be maintained at the temperature required for slicing.

The pallet presents a grid of rows and columns of cavities separated by partitions with thermal insulating capacity, so that once the pallet is filled with ham pieces this is conveyed to a cold store, where the temperature is between -10°C and - 16°C and where the ham pieces are stored until they are required for slicing, which is carried out at a temperature also in the region of -10°C to -16°C.

These pallets may in turn be piled up in the cold store, with the consequent saving in space and ease of stacking.

Lastly, the pallet is taken to the cutter, where a ram pushes the ham pieces contained in each of the cavities towards the slicing machine.

Likewise, each of the ham pieces may be paired with another one in an asymmetric arrangement, so that the pairs of pieces are opposed to each other on a complementary basis at the hock, for the purpose of obtaining a double length piece where the contact area between the two pieces is uniform due to the pressing carried out in a press box with three moving walls.

The upper and transverse moving walls slide first to a given position in order to obtain slices always of the same width and height, while the longitudinal moving wall, which adapts to the shape and determines the length and therefore the number of slices that will be obtained after cutting, actuates afterwards.

Each of these double pieces is inserted into the stainless steel pallet as described above, so that the useful space is maximised as a smaller number of spacer elements are needed and the tops and tails of the product discarded are reduced by half.

### DESCRIPTION OF THE DRAWINGS

The present descriptive report is supplemented with a set of drawings illustrating the preferred embodiment and never restricting the scope of the invention.

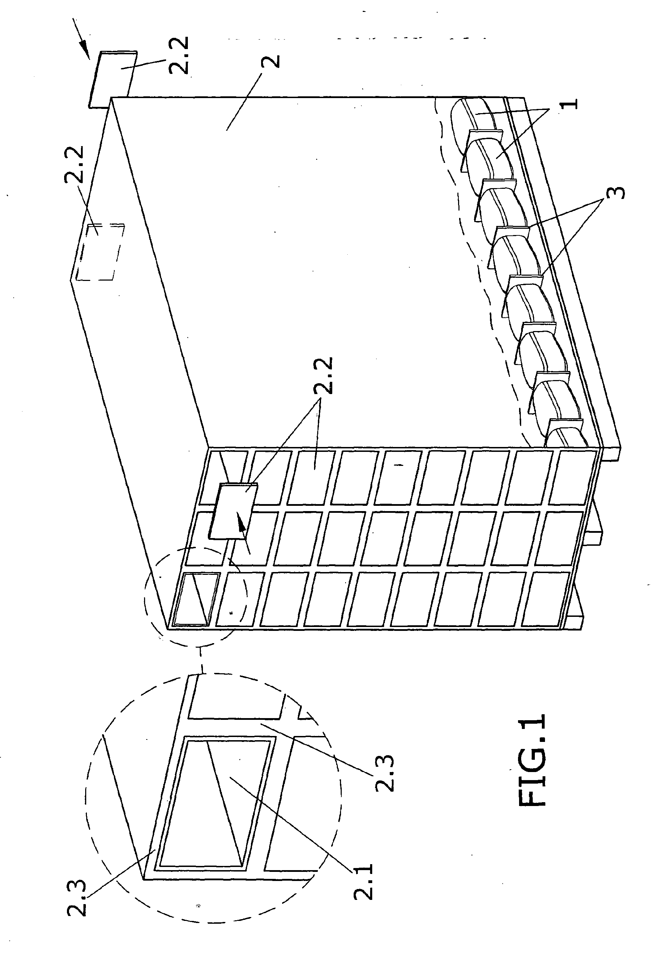

Figure 1 offers a perspective view of the pallet for storing the ham pieces with the feeding of the cavities by means of their hydraulic loading and unloading systems containing the pre-pressed hams, besides showing the thermal insulation elements of the preferred embodiment.

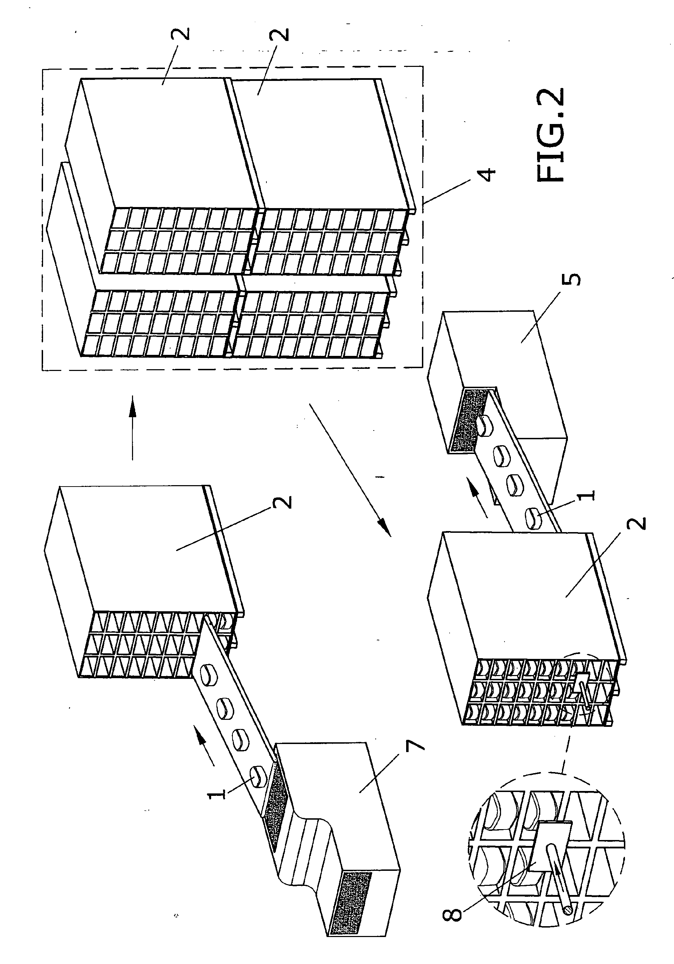

Figure 2 shows a diagrammatic view of the procedure for loading, transporting and unloading de-boned pressed hams.

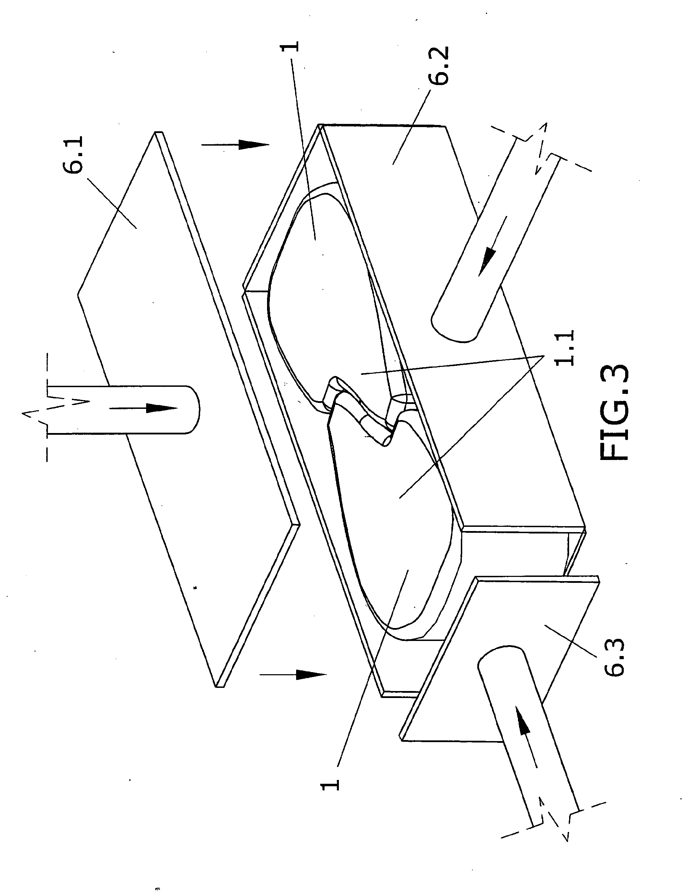

Figure 3 shows an exploded view of a press box with a pair of hams incorporated, where the transverse moving wall has already actuated to take up its fixed position.

### PREFERRED EMBODIMENT OF THE INVENTION

In the light of what is set forth above, the present invention refers to a procedure for loading, transporting and unloading boneless pressed hams, and a pallet for said procedure, especially from amongst those that use one pressing stage in press boxes, designed to facilitate to the utmost the handling of hams in the transporting and slicing of the pieces.

### First example of a preferred embodiment.

At an initial stage the ham piece (1) is de-boned and it is pressed in a press (7) that may be either of two or three dimensions, in order to form as regular a rectangular parallelepiped as possible.

After pressing, the ham piece (1) is stored by means of a ram (8) in cavities (2.1) present in a pallet (2), which in this first example of preferred embodiment is made of stainless steel.

This pallet (2) makes it possible to optimise use of the space, as ham pieces (1) are inserted in each of the cavities (2.1) between which spacers (3) are set in place to enable the ham pieces (2) to be kept at the required temperature until slicing is carried out.

Each of the cavities (2.1) is filled with ham pieces (1), between which the aforesaid spacer elements (3) are set in place, and it is then sealed with a cover (2.2) which prevents the expansion of the ham pieces (1), so that they maintain the temperature and shape required at the slicing stage.

In this first example of preferred embodiment the pallet (2) is composed of a matrix of rows and columns of cavities (2.1), also separated by partitions (2.3) that also present heat-insulating capability, which have an adjoining layer of stainless steel in contact with the ham pieces (1).

Once the pallet (2) has been filled with ham pieces (1), it is conveyed to a cold store (4) where the temperature may be as low as -16 °C for preserving the ham pieces (1), while the pallets (2) may be piled up in the cold store (4), with the consequent space saving and ease of stacking.

The ham pieces (1) remain in the cold store (4) until they are needed for slicing in a cutting machine (5), as the slicing has to be done at a temperature in the region of -10 °C to -16 °C.

Lastly, the pallet (2) is conveyed to the cutting machine (5), where another ram (8) exerts pressure on the ham pieces (1) contained in each of the cavities (2.1).

### Second example of preferred embodiment.

In this second example of preferred embodiment each of the ham pieces (1) can be paired up with another one (1) in an anti-symmetric arrangement, so that the pairs of pieces (1) are opposed to each other in a complementary fashion at the hock (1.1), for purposes of obtaining a piece (1) double the length, where the contact area of the two pieces is uniform owing to the pressing carried out in a press box (6), which has three moving walls.

The upper (6.1) and transverse (6.2) moving walls move to a given position in order to produce slices always of the same length and height and the longitudinal moving wall (6.3), which adapts to the shape and determines the length and therefore the number of slices which will be obtained after cutting, actuates afterwards.

Each of these double pieces (1) is inserted into the stainless steel pallet (2) as described above, with the result that the useful space is maximised to the utmost as a smaller number of spacing elements (3) are needed and the product tops and tails discarded are reduced by half.

The other stages of the process are carried out as described in the first example of preferred embodiment.

The essential nature of this invention is not affected by variations in materials, shape, size and layout of the component parts, described on a non-restrictive basis, said description being sufficient for it to be reproduced by an expert on the matter.

## Claims

1. Procedure for loading, transporting and unloading boneless pressed hams presenting a rectangular parallelepiped shape **characterised in that** the ham piece (1) is pressed (7) and stored in cavities (2.1) present in a pallet (2), where spacer elements (3) are set in place between each ham piece (1) and the next, while the cavities (2.1) are in turn separated by partitions (2.3) that have thermal insulating capability and permit the maintenance of the ham pieces (1) when the pallet (2) is conveyed to a cold store (4), where the ham pieces (1) are kept at the right temperature until being taken to a slicing machine (5).

2. Procedure for loading, transporting and unloading boneless pressed hams according to claim 1 **characterised in that** after the filling of each cavity (2.1) it is sealed with a cover (2.2), which prevents the expansion of the ham pieces (1), so that they retain the required shape at the slicing stage.

3. Procedure for loading, transporting and unloading boneless pressed hams according to claim 1 **characterised in that** the pallets (2) may be stacked in the cold store (4).

4. Procedure for loading, transporting and unloading boneless pressed hams according to claim 1 **characterised in that** the pallet (2), after being removed from the cold store (4), is conveyed to the slicing machine (5), where a ram (8) exerts pressure on the ham pieces (1) included in each of the cavities (2.1).

5. Procedure for loading, transporting and unloading boneless pressed hams according to claim 1 **characterised in that** the ham piece (1) is made up of two ham pieces (1) in an anti-symmetric arrangement, opposed to each other on a complementary basis at the hock (1.1), where the contact area of the two pieces is uniform due to the pressing carried out in the press box (6), which has three moving walls.

6. Procedure for loading, transporting and unloading boneless pressed hams according to claim 5 **characterised in that** an upper moving wall (6.1) and a transverse moving wall (6.2) slide to a given position in order to produce slices always of the same width and height, and a longitudinal moving wall (6.3), which adapts to the shape and determines the length and therefore the number of slices that will be obtained after cutting, actuates afterwards.

7. Pallet for the procedure described in any of the preceding claims **characterised in that** it is made up of a matrix of rows and columns of cavities (2.1).

8. Pallet for the procedure described in any of the preceding claims **characterised in that** it is made of stainless steel.
